# EUROPÄISCHE PATENTSCHRIFT

(11) **EP 2 591 637 B1**
(45) Veröffentlichungstag und Bekanntmachung des Hinweises auf die Patenterteilung: **19.10.2016**
(21) Anmeldenummer: 11738179.8
(22) Anmeldetag: 06.07.2011
(51) Int. Cl.: H05B 3/84

(54) **TRANSPARENTE SCHEIBE MIT HEIZBARER BESCHICHTUNG**
TRANSPARENT PANE HAVING A HEATABLE COATING
VITRE TRANSPARENTE À REVÊTEMENT CHAUFFANT

(30) Priorität: 07.07.2010 EP 10168796
(43) Veröffentlichungstag der Anmeldung: 15.05.2013
(73) Patentinhaber: Saint-Gobain Glass France, 92400 Courbevoie (FR)
(72) Erfinder: LISINSKI, Susanne, 50739 Köln (DE); MELCHER, Martin, 52134 Herzogenrath (DE); OFFERMANN, Volkmar, 52249 Eschweiler (DE); SCHLARB, Andreas, 52134 Herzogenrath (DE)
(74) Vertreter: Gebauer, Dieter Edmund
(86) Internationale Anmeldenummer: PCT/EP2011/061350
(87) Internationale Veröffentlichungsnummer: WO 2012/004279

(56) Entgegenhaltungen:
- EP-A1- 1 450 376
- WO-A1-02/085074
- WO-A1-03/105533
- WO-A1-2006/010698
- US-B1- 6 204 480

## Beschreibung

Die Erfindung betrifft nach ihrer Gattung eine transparente Scheibe mit einer elektrisch heizbaren Beschichtung nach dem Oberbegriff von Patentanspruch 1.

Scheiben mit einer transparenten, elektrisch heizbaren Beschichtung sind als solche wohlbekannt und bereits vielfach in der Patentliteratur beschrieben worden. Lediglich beispielhaft sei in diesem Zusammenhang auf die deutschen Offenlegungsschriften DE 102008018147 A1 und DE 102008029986 A1 verwiesen. In Kraftfahrzeugen werden sie häufig als Windschutzscheiben eingesetzt, da das zentrale Sichtfeld ("Sichtfeld A") von Windschutzscheiben im Unterschied zu Heckscheiben aufgrund gesetzlicher Vorgaben keine Sichteinschränkungen aufweisen darf. Durch die von der heizbaren Beschichtung erzeugte Wärme können auch im zentralen Sichtfeld binnen kurzer Zeit kondensierte Feuchtigkeit, Eis und Schnee entfernt werden.

Transparente Scheiben mit einer elektrisch heizbaren Beschichtung sind meist als Verbundscheiben ausgebildet, in denen zwei Einzelscheiben durch eine thermoplastische Klebeschicht miteinander verbunden sind. Die heizbare Beschichtung kann auf einer der einander zugewandten Oberflächen der beiden Einzelscheiben angeordnet sein, wobei aber auch Aufbauten bekannt sind, bei denen sich die heizbare Beschichtung auf einer Trägerfolie zwischen den beiden Einzelscheiben befindet. Typischer Weise besteht die heizbare Beschichtung aus einem metallischen Material oder einem Metalloxid.

Der Heizstrom wird in der Regel durch mindestens ein Paar streifen- bzw. bandförmiger Sammelleiter ("Bus bars") in die heizbare Beschichtung eingeleitet. Diese sollen den Heizstrom möglichst gleichmäßig in die Beschichtung einleiten und auf breiter Front verteilen. Da die bandförmigen Sammelleiter undurchsichtig sind, werden sie durch opake Maskierungsstreifen überdeckt. Diese bestehen aus einem nicht leitfähigen, schwarz eingefärbten, einbrennbaren Material, das beispielsweise als Siebdruckpaste mittels Siebdruck auf die Scheibe aufgebracht wird.

Der elektrische Flächenwiderstand (Widerstand pro Flächeneinheit) der heizbaren Beschichtung liegt bei den zurzeit in der industriellen Serienfertigung eingesetzten Materialien in der Größenordnung von einigen Ohm pro Quadrat (Ω/□). Um bei der in Kraftfahrzeugen standardmäßig zur Verfügung stehenden Bordspannung von 12 bis 24 Volt eine ausreichende Heizleistung zu erzielen, sollten die Sammelleiter in Anbetracht der Tatsache, dass der Flächenwiderstand mit der Länge des Strompfads zunimmt einen möglichst geringen Abstand voneinander haben. Bei Fahrzeugscheiben, die in der Regel breiter als hoch sind, sind die Sammelleiter deshalb typischerweise entlang der längeren Seiten der Scheibe (in Einbaulage oben und unten) angeordnet, so dass der Heizstrom über den kürzeren Weg der Scheibenhöhe fließen kann. Diese Gestaltung hat zur Folge, dass im Bereich einer Ruhe- oder Parkstellung von zum Wischen der Scheibe vorgesehenen Scheibenwischern gewöhnlich keine ausreichende Heizleistung vorliegt, so dass die Scheibenwischer festfrieren können. Andererseits ist eine Kontaktierung des oberen Sammelleiters mit einem relativ hohen technischen Aufwand verbunden. Zudem müssen die streifenförmigen Sammelleiter über eine ausreichend große Breite verfügen, so dass eine lokale Überhitzung der Scheibe im Bereich der Sammelleiter vermieden wird. Bei den in der Praxis eingesetzten Materialien haben die Sammelleiter in der Regel eine Breite, die im Bereich von 14 bis 16 mm liegt und typischer Weise 16 mm beträgt. Dies bedeutet aber auch, dass die Sammelleiter in den oberen und unteren Randbereichen der Scheibe entsprechend viel Platz benötigen.

Vor dem Hintergrund schwindender fossiler Ressourcen rücken in jüngster Zeit zunehmend elektrisch betriebene Kraftfahrzeuge mit einer hohen Bordspannung, die im Bereich von 100 bis 400 Volt liegt, ins öffentliche Interesse. Eine solche hohe Bordspannung kann nicht an eine herkömmliche, für eine Bordspannung im Bereich von 12 bis 24 Volt ausgelegte, heizbare Beschichtung angeschlossen werden, da dies zu einer lokalen Überhitzung der Scheibe führen würde. Vielmehr ist zuvor eine geeignete Spannungswandlung erforderlich, was jedoch mit Kosten für den Spannungskonverter verbunden ist und darüber hinaus elektrische Verluste verursacht. Eine andere Vorgehensweise besteht darin den effektiven Widerstand der heizbaren Beschichtung zu erhöhen, beispielsweise indem die Schichtdicke vermindert oder diese aus einem Material mit einem relativ hohen spezifischen Widerstand gefertigt wird. Eine weitere Möglichkeit zeigt die internationale Patentanmeldung WO 2004/103926 A1 auf, bei welcher die Widerstandsschicht eines Heizglases durch Entschichtung so unterteilt wird, dass sich der elektrische Widerstand erhöht.

Die Internationale Patentanmeldung WO 03/105533 A1 zeigt eine Verglasung mit einer transparenten Heizschicht mit einem Flächenwiderstand zwischen 2 und 100 Ω/□ für eine Betriebsspannung zwischen 10 und 100 Volt und einer Heizleistung zwischen 250 und 750 Watt pro Quadratmeter. Die Breite der Busbars ist mit 5 mm angegeben.

Demgegenüber besteht die Aufgabe der vorliegenden Erfindung darin, gattungsgemäße transparente Scheiben mit elektrisch heizbarer Beschichtung in vorteilhafter Weise weiterzubilden. Insbesondere sollen die Scheiben bei einer Speisespannung im Bereich von mehr als 100 bis 400 Volt (V) ohne vorherige Spannungskonvertierung eine für praktische Anwendungen geeignete Heizleistung abgeben. Weiterhin sollen die Scheiben einfach und kostengünstig herstellbar sein und eine ansprechende äußere Erscheinung ermöglichen. Diese und weitere Aufgaben werden nach dem Vorschlag der Erfindung durch eine transparente Scheibe mit heizbarer Beschichtung mit den Merkmalen des unabhängigen Patentanspruchs gelöst. Vorteilhafte Ausgestaltungen der Erfindung sind durch die Merkmale der Unteransprüche angegeben.

Die transparente Scheibe umfasst nach ihrer Gattung eine elektrisch heizbare, transparente (elektrisch leitfähige) Beschichtung, die sich zumindest über einen wesentlichen Teil der Scheibenfläche, insbesondere über deren Sichtfeld, erstreckt. Die leitfähige Beschichtung ist mit mindestens zwei band- bzw. streifenförmigen Sammelleitern elektrisch so verbunden, dass nach Anlegen einer von einer Spannungsquelle bereitgestellten Speisespannung ein Heizstrom über ein von der Beschichtung zwischen den Sammelleitern geformtes Heizfeld fließt. Die streifenförmigen Sammelleiter sind zur Verbindung mit den verschiedenen Polen der Spannungsquelle vorgesehen und dienen zum Einleiten und breiten Verteilen des Stroms in der heizbaren Beschichtung. Beispielsweise sind die Sammelleiter zu diesem Zweck mit der heizbaren Beschichtung galvanisch gekoppelt.

Nach dem Vorschlag der Erfindung zeichnet sich die transparente Scheibe in wesentlicher Weise dadurch aus, dass die heizbare Beschichtung einen solchen elektrischen Widerstand hat, dass bei Anlegen einer Speisespannung im Bereich von mehr als 100 bis 400 V eine Heizleistung im Bereich von 300 bis 1000 Watt/Quadratmeter (W/m²) vom Heizfeld abgegeben wird. Zudem haben die streifenförmigen Sammelleiter jeweils zumindest in einem oder mehreren Sammelleiterabschnitten eine maximale Breite von weniger als 5 mm, wobei die Breite in diesen Sammelleiterabschnitten zudem so bemessen ist, dass eine maximale elektrische Verlustleistung pro Längeneinheit von 10 Watt/Meter (W/m) abgegeben wird. Beispielsweise können die streifenförmigen Sammelleiter über ihre gesamte Erstreckung eine Breite von weniger als 5 mm aufweisen. Alternativ können die streifenförmigen Sammelleiter in einem oder mehreren Sammelleiterabschnitten eine Breite von weniger als 5 mm aufweisen. Im letztgenannten Fall können die Sammelleiter auch Sammelleiterabschnitte mit einer Breite von mehr als 5 mm aufweisen, beispielsweise in Anschlussabschnitten, in denen sie von Anschlussleitern zur Verbindung mit einer Spannungsquelle kontaktiert sind.

Als "Breite" soll hier und im Weiteren die Abmessung der streifenförmigen Sammelleiter senkrecht zu ihrer Erstreckungsrichtung ("Länge") verstanden sein. Eine "Dicke" der streifenförmigen Sammelleiter ergibt sich durch deren Abmessung senkrecht zur Länge und Breite.

Die erfindungsgemäße Scheibe verfügt somit über streifenförmige Sammelleiter, deren Breite zumindest abschnittsweise wesentlich geringer ist, als bei den bislang in der Praxis eingesetzten streifenförmigen Sammelleitern. Wie Versuche der Anmelderin gezeigt haben, ist es bei einer Speisespannung im Bereich von mehr als 100 bis 400 Volt und einem für eine geeignete Heizleistung der Scheibe entsprechend hohen Widerstand der heizbaren Beschichtung möglich, die Breite der streifenförmigen Sammelleiter zumindest abschnittsweise deutlich zu verringern, ohne dabei im Betrieb eine lokale Überhitzung der Scheibe zu verursachen. Erfindungsgemäß beträgt die Breite der streifenförmigen Sammelleiter zumindest abschnittsweise weniger als 5 mm und liegt dabei weit unterhalb der Breite der in der Praxis bislang eingesetzten Sammelleiter, wobei die Breite der Sammelleiter dabei aber noch hinreichend groß bemessen ist, um eine lokale Überhitzung der Scheibe zu vermeiden. Diese Bemessungsregel löst den Zielkonflikt, der sich aus dem Wunsch nach einer möglichst geringen Breite der Sammelleiter und einer damit einher gehenden Vergrößerung der Verlustleistung der Sammelleiter ergibt, in einer für praktische Anwendungen zufrieden stellenden Weise. Dem Fachmann war bislang eine Verringerung der Breite der streifenförmigen Sammelleiter bei einer Fahrzeug-Bordspannung im Bereich von 12 bis 24 Volt aufgrund der Gefahr einer lokalen Scheibenüberhitzung verwehrt. Tatsächlich ist erstmals durch die erfindungsgemäße Scheibe die Verwendung relativ schmaler Sammelleiter zur Kontaktierung der heizbaren Beschichtung in der Praxis möglich, was eine Reihe wesentlicher Vorteile mit sich bringt, wie im Weiteren ausführlich dargelegt ist. Die Verringerung der Breite der Sammelleiter wird durch den im Vergleich zur herkömmlichen Bordspannung von 12 bis 14 V geringeren Heizstrom bei einer Betriebsspannung von mehr als 100 bis 400 V ermöglicht. Der vergleichsweise niedrigere Heizstrom geht mit einer verringerten Verlustleistung der Sammelleiter einher.

Der spezifische elektrische Widerstand der streifenförmigen Sammelleiter hängt allgemein vom verwendeten Sammelleiternmaterial ab, wobei er insbesondere für im Druckverfahren (zum Beispiel Siebdruckverfahren) hergestellte Sammelleiter im Bereich von 2 bis 4 Mikroohm·Zentimeter (µOhm·cm) liegt. Als Sammelleitermaterial kann beispielsweise ein Metall wie Silber (Ag), insbesondere in Form einer Druckpaste zur Verwendung im Druckverfahren, Kupfer (Cu), Aluminium (Al) und Zink (Zn), oder eine Metalllegierung verwendet werden, wobei diese Aufzählung nicht abschließend ist. Beispielsweise beträgt der spezifische elektrische Widerstand einer 80%-igen Silberdruckpaste für das Siebdruckverfahren 2,8 µOhm·cm und der spezifische elektrische Widerstand einer streifenförmigen Cu-Litze 1,67 µOhm·cm.

Durch den im Vergleich zu herkömmlichen Sammelleitern vergleichsweise niedrigen spezifischen Widerstand der Sammelleiter der erfindungsgemäßen Scheibe wird in vorteilhafter Weise eine Verringerung der Breite der Sammelleiter ermöglicht, da der relativ niedrige spezifische Widerstand mit einer vergleichsweise niedrigen Verlustleistung der Sammelleiter einher geht. In Verbindung mit der relativ hohen Betriebsspannung von mehr als 100 bis 400 V, welche bereits eine Verringerung der Breite der Sammelleiter ermöglicht, kann somit die Breite der Sammelleiter noch weiter verkleinert werden. Die erfindungsgemäße Lehre ermöglicht somit im Vergleich zu herkömmlichen heizbaren Scheiben wesentlich schmälere Sammeleiter. Erfindungsgemäß beträgt die Breite der streifenförmigen Sammelleitern zumindest in einem oder mehreren Abschnitten weniger als 5 mm, wobei die Breite der streifenförmigen Sammelleitern in diesen Abschnitten zudem so bemessen ist, dass sie jeweils eine Heizleistung von maximal 10 W/m, vorzugsweise maximal 8 W/m, und beispielsweise 5 W/m abgeben. Vorzugsweise liegt die Breite der streifenförmigen Sammelleitern zu diesem Zweck zumindest abschnittsweise im Bereich von 1 bis weniger als 5 mm, wobei die Breite der Sammelleiter insbesondere auch maximal 1 mm bzw. weniger als 1 mm betragen kann.

Die Sammelleiter sind im Vergleich zu der hochohmigen heizbaren Beschichtung relativ niederohmig. Vorzugsweise haben die streifenförmigen Sammelleiter einen elektrischen Widerstand pro Längeneinheit, der im Bereich von 0,15 bis 4 Ω/m liegt. Durch diese Maßnahme kann erreicht werden, dass die angelegte Speisespannung im Wesentlichen über dem elektrischen Widerstand der heizbaren Beschichtung abfällt, so dass sich die Sammelleiter im Betrieb nur wenig aufheizen und ein geringer Anteil der verfügbaren Heizleistung an den Sammelleitern als Verlustleistung abgegeben wird. Vorzugsweise beträgt eine auf die Heizleistung der heizbaren Beschichtung bezogene relative Heizleistung der streifenförmigen Sammelleiter weniger als 5%, stärker bevorzugt weniger als 2%.

Die Dicke der streifenförmigen Sammelleiter hängt allgemein vom verwendeten Sammelleitermaterial ab. Für beispielsweise aus Silber (Ag) bestehende Sammelleiter, welche im Druckverfahren hergestellt sind, liegt die Dicke vorzugsweise im Bereich von 5 bis 25 Mikrometer (um), stärker bevorzugt im Bereich von 10 bis 15 µm. Für diese Sammelleiter liegt eine Querschnittsfläche bzw. Schnittfläche entlang der Breite und senkrecht zur Länge vorzugsweise im Bereich von 0,01 bis 1 Quadratmillimeter (mm²), stärker bevorzugt im Bereich von 0,1 bis 0,5 mm².

Für beispielsweise aus Kupfer (Cu) bestehende, vorgefertigte streifenförmige Sammelleiter (Litzen), welche mit der heizbaren Beschichtung elektrisch verbunden sind, liegt die Dicke vorzugsweise im Bereich von 30 bis 150 µm, stärker bevorzugt im Bereich von 50 bis 100 µm. Für diese Sammelleiter liegt die Querschnittsfläche vorzugsweise im Bereich von 0,05 bis 0,25 mm².

Wie eingangs bereits ausgeführt, können die streifenförmigen Sammelleiter beispielsweise durch Aufdrucken einer metallischen Druckpaste auf die leitfähige Beschichtung, insbesondere im Siebdruckverfahren, hergestellt werden. In diesem Fall ist es erfindungsgemäß von Vorteil, wenn die Breite der streifenförmigen Sammelleiter zumindest abschnittsweise weniger als 5 mm beträgt. Bei der oben genannten alternativen Herstellungsform, bei welcher die streifenförmigen Sammelleiter in Form von mit der leitfähigen Beschichtung verbundenen, vorgefertigten Metallstreifen hergestellt sind, welche dann mit der heizbaren Beschichtung elektrisch verbunden werden, beträgt die Breite der Metallstreifen zumindest abschnittsweise weniger als 5 mm. Zudem ist es in dem letztgenannten Fall bevorzugt, wenn die streifenförmigen Sammelleiter mittels eines elektrisch leitfähigen Klebstoffs an der heizbaren Beschichtung befestigt sind, wodurch die Scheibe besonders einfach und kostengünstig hergestellt werden kann. Gleichermaßen kann es von Vorteil sein, wenn ein Anschlussleiter zur elektrischen Verbindung eines Sammelleiters mit der Spannungsquelle durch einen leitfähigen Klebstoff mit dem Sammelleiter fest verbunden ist. Aufgrund des vergleichsweise hohen elektrischen Widerstands leitfähiger Klebstoffe und dem damit einher gehenden hohen Innenwiderstand der Sammelleiter, der eine relativ große Verlustleistung der Sammelleiter bewirkt, war dem Fachmann bislang die Verwendung leitfähiger Klebstoffe verwehrt. Vielmehr ist erstmals durch die erfindungsgemäße Scheibe die Verwendung leitfähiger Klebstoffe wegen der hohen Betriebs- bzw. Speisespannung und des darauf abgestimmten relativ hohen Widerstands der heizbaren Beschichtung ohne wesentliche Erhöhung der Verlustleistung der streifenförmigen Sammelleiter ermöglicht. Bei dem leitfähigen Klebstoff kann es sich insbesondere um einen drucksensitiven Klebstoff handeln, welcher isotrop oder anisotrop leitend ist. Hierbei kann es sich insbesondere um einen leitfähigen Klebstoff auf der Basis von Epoxyharz oder eines Heizschmelzsystems handeln. Abhängig von der Speisespannung und der Heizleistung ist der durch den leitfähigen Klebstoff fließende Strom gering und beträgt maximal 5 Ampere (A). Deshalb ist es möglich, dass eine kleinere Heizleistung pro Fläche am Kontaktwiderstand vorliegt als in der Heizbeschichtung. Wenn beispielsweise der Kontaktwiderstand 1 Ω mm², die Kontaktfläche 200 mm² und der Heizstrom 3 A betragen, beträgt die Heizleistung pro Flächeneinheit am Kontakt 2,25 W/dm².

In der erfindungsgemäßen Scheibe ist der elektrische Widerstand der heizbaren Beschichtung so bemessen, dass bei Anlegen einer Speisespannung im Bereich von mehr als 100 bis 400 V eine für praktische Anwendungen geeignete Heizleistung im Bereich von 300 bis 1000 Watt/m² vom Heizfeld abgegeben wird. Vorzugsweise ist der elektrische Widerstand der heizbaren Beschichtung dabei so gewählt, dass der durch die Heizfläche fließende Strom eine Größe von maximal 5 A hat, wobei durch diese Maßnahme in vorteilhafter Weise erreicht wird, dass sich die Heiz- bzw. Verlustleistung der streifenförmigen Sammelleiter mit einer Verringerung der Breite nur relativ wenig erhöht.

Allgemein hängt der elektrische Widerstand der heizbaren Beschichtung von dem verwendeten Beschichtungsmaterial ab, wofür beispielsweise Silber (Ag) verwendet wird. Vorzugsweise liegt der elektrische Widerstand pro Flächeneinheit der heizbaren Beschichtung dabei im Bereich von 5 bis 200 Ω/□, bevorzugt im Bereich von 10 bis 80 Ω/□ und insbesondere im Bereich von 40 bis 80 Ω/□. Von Vorteil im Hinblick auf eine möglichst geringe Verlustleistung der Sammelleiter kann es aber auch sein, wenn der elektrische Widerstand pro Flächeneinheit der heizbaren Beschichtung relativ hoch ist. Erfindungsgemäß liegt er im Bereich von mehr als 100 bis 200 Ω/□.

Der elektrische Widerstand der heizbaren Beschichtung kann durch die Schichtdicke beeinflusst werden, wobei der elektrische Widerstand zunimmt, wenn die Schichtdicke verringert wird. Bei einer Speisespannung von 100 V und einer Heizleistung von 400 W/m² beträgt der Flächen widerstand der heizbaren Beschichtung beispielsweise 11 Ω/□. Bei einer Speisespannung von 400 V und einer Heizleistung von 1000 W/m² beträgt der Flächenwiderstand der heizbaren Beschichtung beispielsweise 80 Ω/□. Die Zunahme des Flächenwiderstands der heizbaren Beschichtung kann durch eine Vergrößerung der Schichtdicke erreicht werden.

Ein anderer Weg zur Erhöhung des elektrischen Widerstands der heizbaren Beschichtung ist durch eine Vergrößerung der Länge des Strompfads gegeben. Dementsprechend kann es in der erfindungsgemäßen Scheibe von Vorteil sein, wenn das Heizfeld durch eine oder mehrere entschichtete Zonen in eine Mehrzahl galvanisch (vollständig) voneinander getrennte Beschichtungsbereiche (Segmente) aufgeteilt ist (Segmentierung), wobei die Beschichtungsbereiche hinsichtlich der elektrisch leitenden Beschichtung voneinander vollständig elektrisch isoliert, jedoch durch die Sammelleiter seriell elektrisch miteinander verbunden sind. Eine Entschichtung kann beispielsweise durch mechanischen oder chemischen Abtrag, insbesondere Laserabtrag, bewirkt werden. Die entschichteten Zonen durchtrennen die elektrisch heizbare Beschichtung jeweils vollständig, so dass die Beschichtungsbereiche bezogen auf die Heizbeschichtung galvanisch voneinander getrennt (elektrisch isoliert) sind. Durch diese Maßnahme kann in vorteilhafter Weise eine Vergrößerung des effektiven Widerstands (Gesamtwiderstand unter Berücksichtigung der entschichteten Zonen) erreicht werden. Der Flächenwiderstand der heizbaren Beschichtung liegt vor der Herstellung der entschichteten Zonen vorzugsweise im Bereich von 1 bis 10 Ω/□ und beträgt insbesondere bevorzugt 4 Ω/□. Nach Herstellung der entschichteten Zonen liegt der Gesamtwiderstand der heizbaren Beschichtung vorzugsweise im Bereich von 10 bis 160 Ω, stärker bevorzugt im Bereich von 40 bis 80 Ω. Durch die Segmentierung der Beschichtung ist in besonders vorteilhafter Weise eine Verkürzung der jeweiligen Länge der Sammelleiter ermöglicht, mit der Folge, dass die Breite der Sammelleiter noch weiter reduziert werden kann. Die Segmentierung der Beschichtung kann insbesondere mit einer Schichtdickenzunahme der heizbaren Beschichtung kombiniert werden.

In der erfindungsgemäßen Scheibe kann das Heizfeld andererseits durch eine oder mehrere entschichteten Zonen in eine Mehrzahl galvanisch seriell miteinander verbundener Beschichtungsbereiche (Segmente) derart unterteilt sein, dass ein Strompfad zwischen den Sammelleitern gegenüber dem Strompfad eines Heizfelds ohne entschichtete Zonen verlängert ist. Die entschichteten Zonen durchtrennen somit die elektrisch heizbare Beschichtung nur abschnittsweise, so dass die Beschichtungsbereiche bezogen auf die heizbare Beschichtung galvanisch nicht voneinander getrennt (elektrisch isoliert), sondern vielmehr galvanisch miteinander verbunden sind. Auch durch diese Maßnahme kann in vorteilhafter Weise eine Vergrößerung des effektiven Flächenwiderstands (Gesamtwiderstand) der Beschichtung erreicht werden.

Bei einer weiteren vorteilhaften Ausgestaltung der erfindungsgemäßen Scheibe sind die streifenförmigen Sammelleiter in einer gemeinsamen Kontaktzone von einem mit der Spannungsquelle elektrisch verbundenen Anschlussleiter kontaktierbar. Insbesondere bei einer Ausführung der erfindungsgemäßen Scheibe als Fahrzeug-Windschutzscheibe kann sich die gemeinsame Kontaktzone an einer unteren Ecke der Windschutzscheibe befinden. Durch diese Maßnahme ist in vorteilhafter Weise eine technisch besonders einfache und kostengünstige Kontaktierung der streifenförmigen Sammelleiter, insbesondere zum Anschluss an die Spannungsquelle, ermöglicht.

Bei einer weiteren vorteilhaften Ausgestaltung der erfindungsgemäßen Scheibe ist diese als Verbundscheibe ausgebildet. Die Verbundscheibe umfasst zwei starre oder flexible Einzelscheiben (Innen- und Außenscheibe), die durch zumindest eine thermoplastische Klebeschicht miteinander verbunden sind. Es versteht sich, dass die beiden Einzelscheiben nicht zwangsläufig aus Glas bestehen müssen, sondern dass diese auch aus einem nicht-gläsernen Material, beispielsweise Kunststoff, bestehen können. Die heizbare Beschichtung befindet sich auf zumindest einer Oberfläche der Einzelscheiben, beispielsweise auf der zur Außenscheibe gewandten Oberfläche der Innenscheibe, und/oder auf einer Oberfläche eines zwischen den beiden Einzelscheiben angeordneten Trägers.

Bei einer weiteren vorteilhaften Ausgestaltung der erfindungsgemäßen Scheibe, bei der sie als Fahrzeug-Windschutzscheibe ausgeführt ist, befindet sich ein an einem unteren Randbereich der Scheibe angeordneter streifenförmiger Sammelleiter zur Kontaktierung der heizbaren Beschichtung unterhalb einer Ruhe- oder Parkstellung von zum Wischen der Scheibe vorgesehenen Scheibenwischern. Im Unterschied zu herkömmlichen gattungsgemäßen Scheiben kann die erfindungsgemäße transparente Scheibe somit erstmals auch im Bereich der Ruhe- oder Parkstellung von Scheibenwischern durch die heizbare Beschichtung geheizt werden. Insbesondere kann durch diese Maßnahme in vorteilhafter Weise auf zusätzliche Vorkehrungen zur Heizung dieses Bereichs verzichtet werden. Alternativ oder zusätzlich kann der am unteren Randbereich angeordnete streifenförmige Sammelleiter und/oder eine streifenförmige Zuleitung zum Sammelleiter im Bereich der Ruhe- oder Parkstellung von Scheibenwischern angeordnet sein, um diesen Bereich durch die vom Sammelleiter und/oder der Zuleitung abgegebene Wärme zu heizen.

Bei einer weiteren vorteilhaften Ausgestaltung der erfindungsgemäßen Scheibe, bei der sie als Fahrzeug-Windschutzscheibe ausgeführt ist, sind die streifenförmigen Sammelleiter zur Kontaktierung der heizbaren Beschichtung in den beiden einander gegenüberliegenden, seitlichen Randbereichen der Scheibe angeordnet. In der Regel handelt es sich hierbei um die kürzeren Seiten der in der Regel zumindest annähernd trapezförmigen Windschutzscheiben (in Einbaulage links und rechts). Durch diese Maßnahme kann in vorteilhafter Weise eine besonders einfache Herstellung der Scheibe erreicht werden, wobei insbesondere die elektrische Verbindung der streifenförmigen Sammelleiter in einfacher und ästhetisch ansprechender Weise möglich ist. Zudem ist die Serienfertigung erleichtert, da sich die Breiten der Windschutzscheiben im Unterschied zu deren Höhen bei unterschiedlichen Fahrzeugmodellen häufig nicht unterscheiden.

Vorzugsweise sind die in den seitlichen Randbereichen der Scheibe angeordneten, streifenförmigen Sammelleiter von zumindest einem, beispielsweise als schwarzer Siebdruckrand ausgeführten, opaken Abdeckelement überdeckt. Im Unterschied zu den breiteren Sammelleitern herkömmlicher Windschutzscheiben sind die Sammelleiter der erfindungsgemäßem Scheibe durch den in der Regel relativ schmalen schwarzen Siebdruckrand in den seitlichen Randbereichen der Scheibe kaschierbar.

Ferner erstreckt sich die Erfindung auf eine Scheibenanordnung, welche eine wie oben beschrieben ausgebildete Scheibe, sowie eine Spannungsquelle zum Bereitstellen der Speisespannung umfasst.

Die Erfindung erstreckt sich weiterhin auf die Verwendung einer wie oben beschriebenen Scheibe als funktionales und/oder dekoratives Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach. Vorzugsweise ist die erfindungsgemäße Scheibe als Fahrzeug-Windschutzscheibe oder Fahrzeug-Seitenscheibe ausgeführt.

Es versteht sich, dass die vorstehend genannten und nachstehend zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Fig. 1-2: perspektivische Ansichten von beispielhaften Ausgestaltungen einer erfindungsgemäßen Windschutzscheibe;
- Fig. 3-5: Schnittansichten weiterer beispielhafter Ausgestaltungen der erfindungsgemäßen Windschutzscheibe;
- Fig. 6-9: perspektivische Ansichten weiterer beispielhafter Ausgestaltungen der erfindungsgemäßen Windschutzscheibe.

### Ausführliche Beschreibung der Zeichnungen

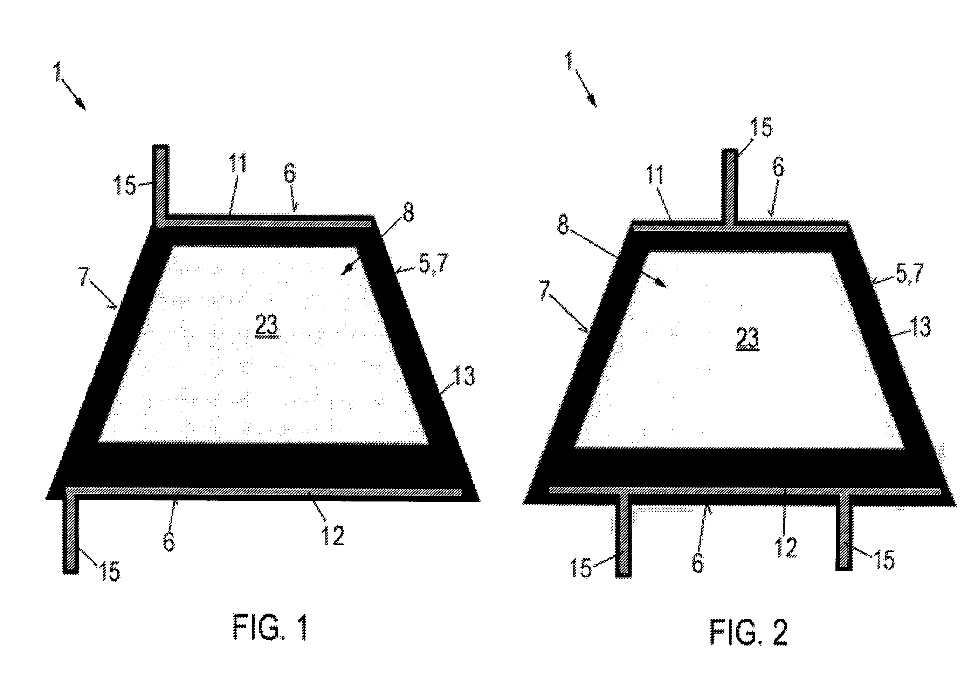

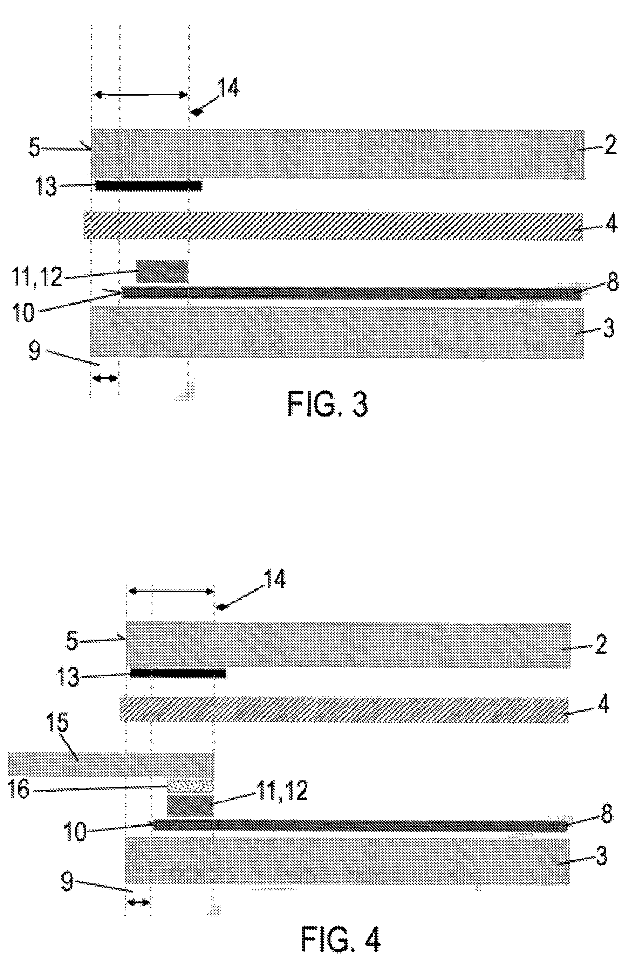

Seien zunächst die Figuren 1 bis 5 betrachtet, wobei die Figuren 1 bis 2 jeweils eine insgesamt mit der Bezugszahl 1 bezeichnete Windschutzscheibe in typischer Einbaulage in einem Kraftfahrzeug und die Figuren 3 bis 5 Schnittansichten der Windschutzscheiben senkrecht zur Scheibenebene zeigen. Bei diesen Ausgestaltungen der Windschutzscheibe 1 handelt es sich um eine Verbundscheibe, deren Aufbau in den Schnittansichten gezeigt ist.

Demnach umfasst die Windschutzscheibe 1 eine starre Außenscheibe 2 und eine starre Innenscheibe 3, die beide als Einzelscheiben ausgebildet und durch eine thermoplastische Klebeschicht 4, hier beispielsweise eine Polyvinylbutyralfolie (PVB), Ethylen-Vinyl-Acetat-Folie (EVA) oder Polyurethanfolie (PU) fest miteinander verbunden sind. Die beiden Einzelscheiben sind von gleicher Größe, haben eine trapezförmig geschwungene Kontur und sind beispielsweise aus Glas gefertigt, wobei sie gleichermaßen aber auch aus einem nichtgläsernen Material wie Kunststoff hergestellt sein können. Für eine andere Anwendung wie als Fahrzeug-Windschutzscheibe 1 wäre es auch möglich, die beiden Einzelscheiben aus einem flexiblen Material herzustellen.

Die Kontur der Windschutzscheibe 1 ergibt sich durch einen den beiden Einzelscheiben 2, 3 gemeinsamen Scheibenrand 5. Entsprechend ihrer Trapezform verfügt die Windschutzscheibe 1 über zwei einander gegenüberliegende erste Seiten 6 in Entsprechung zu den oberen und unteren Scheibenrändern und zwei einander gegenüberliegende zweite Seiten 7 in Entsprechung zu den linken und rechten (seitlichen) Scheibenrändern.

Wie in den Figuren 3 bis 5 gezeigt, ist auf der mit der Klebeschicht 4 verbundenen Seite der Innenscheibe 3 eine transparente, elektrisch heizbare, leitfähige Heizbeschichtung 8 abgeschieden. Die Heizbeschichtung 8 ist hier beispielsweise im Wesentlichen vollflächig auf die Innenscheibe 3 aufgebracht, wobei ein allseitig umlaufender Randstreifen 9 der Innenscheibe 3 nicht beschichtet ist, so dass ein Beschichtungsrand 10 der Heizbeschichtung 8 gegenüber dem Scheibenrand 5 nach innen rückversetzt ist. Hierdurch wird eine elektrische Isolierung der Heizbeschichtung 8 nach außen bewirkt. Zudem wird die Heizbeschichtung 8 gegen vom Scheibenrand 5 vordringende Feuchtigkeit geschützt.

Die transparente Heizbeschichtung 8 umfasst in an sich bekannter Weise eine Schichtenfolge (nicht näher dargestellt) mit mindestens einer elektrisch heizbaren, metallischen Teilschicht, vorzugsweise Silber (Ag), und gegebenenfalls weiteren Teilschichten wie Entspiegelungs- und Blockerschichten. Vorteilhaft ist die Schichtenfolge thermisch hoch belastbar, so dass sie die zum Biegen von Glasscheiben erforderlichen Temperaturen von typischer Weise mehr als 600°C ohne Schädigung übersteht, wobei aber auch thermisch gering belastbare Schichtenfolgen vorgesehen sein können. Die Heizbeschichtung 8 kann gleichermaßen als metallische Einzelschicht aufgebracht sein. Ebenso ist denkbar, die Heizbeschichtung 8 nicht direkt auf die Innenscheibe 3 aufzubringen, sondern diese zunächst auf einen Träger, beispielsweise eine Kunststofffolie, aufzubringen, der anschließend mit der Außen- und Innenscheibe 2, 3 verklebt wird. Die Heizbeschichtung 8 wird vorzugsweise durch Sputtern bzw. Magnetron-Kathodenzerstäubung aufgebracht.

Wie in Fig. 1 und 2 dargestellt, ist die Heizbeschichtung 8 an der oberen ersten Seite 6 der Windschutzscheibe 1 mit einem streifenförmigen ersten Sammelleiter 11 (Bus bar) und an der unteren ersten Seite 6 der Windschutzscheibe 1 mit einem streifenförmigen zweiten Sammelleiter 12 (Bus bar) elektrisch verbunden. Der erste Sammelleiter 11 ist zur Verbindung mit dem einen Pol und der zweite Sammelleiter 12 zur Verbindung mit dem anderen Pol einer (nicht gezeigten) Spannungsquelle vorgesehen. Die beiden Sammelleiter 11, 12 gegensätzlicher Polarität dienen für eine gleichmäßige Einleitung und breite Verteilung des Heizstroms in der Heizbeschichtung 8, wobei zwischen den beiden Sammelleitern 11, 12 ein heizbarer Abschnitt (Heizfeld) der Heizbeschichtung 8 eingeschlossen ist. Dabei befindet sich der untere zweite Sammelleiter 12 nahe dem unteren Scheibenrand 5, insbesondere unterhalb einer (nicht dargestellten) Ruhe- oder Parkstellung von zum Wischen der Windschutzscheibe 1 vorgesehenen Scheibenwischern. Somit erstreckt sich das Heizfeld bis in diesen Bereich der Windschutzscheibe 1 hinein und kann durch das Heizfeld ausreichend beheizt werden, um ein Festfrieren der Scheibenwischer zu verhindern. Auf zusätzliche Vorkehrungen zur Heizung dieses Bereichs kann verzichtet werden. Alternativ könnte sich der untere zweite Sammelleiter 12 auch innerhalb des Bereichs der Ruhe- oder Parkstellung der Scheibenwischer befinden, um diesen Bereich durch die abgegebene Wärme (Verlustleistung) des zweiten Sammelleiters 12 zu heizen.

Die beiden Sammelleiter 11, 12 sind jeweils mit Anschlussleitern 15 zum Anschluss an die Spannungsquelle elektrisch verbunden, welche hier beispielsweise als Metallbänder ausgeführt sind. In Fig. 1 ist eine Variante dargestellt, bei der der obere erste Sammelleiter 11 von einem im linken oberen Eckbereich der Windschutzscheibe 1 angeordneten Anschlussleiter 15 kontaktiert wird, während der untere zweite Sammelleiter 12 von einem weiteren Anschlussleiter 15, der im linken unteren Eckbereich der Windschutzscheibe 1 angeordnet ist, kontaktiert wird. Dagegen zeigt Fig. 2 eine Variante, bei der der obere erste Sammelleiter 11 von einem mittig der Windschutzscheibe 1 angeordneten Anschlussleiter 15 kontaktiert wird, während der untere zweite Sammelleiter 12 von zwei weiteren Anschlussleitern 15, die jeweils seitlich versetzt zur Mitte der Windschutzscheibe 1 angeordnet sind, kontaktiert wird.

Weiterhin ist ein Randbereich der der Innenscheibe 3 zugewandten Oberfläche der Außenscheibe 2 mit einer opaken Farbschicht versehen, die einen rahmenförmig umlaufenden Maskierungsstreifen 13 bildet. Der Markierungsstreifen 13 besteht beispielsweise aus einem elektrisch isolierenden, schwarz eingefärbten Material, das in die Außenscheibe 2 eingebrannt ist. Der Markierungsstreifen 13 verhindert einerseits die Sicht auf einen Klebestrang (nicht gezeigt), mit dem die Windschutzscheibe 1 in die Fahrzeugkarosserie eingeklebt wird, andererseits dient er als UV-Schutz für das verwendete Klebematerial. Weiterhin bestimmt der Markierungsstreifen 13 das Sichtfeld der Windschutzscheibe 1. Eine weitere Funktion des Maskierungsstreifens 13 ist eine Kaschierung der beiden Sammelleiter 11, 12, so dass diese von außen nicht erkennbar sind. Zu diesem Zweck überdeckt der Maskierungsstreifen 13 jeweils die beiden Sammelleiter 11, 12, wobei der Maskierungsstreifen 13 über ein gewisses Übermaß 14 bzw. Toleranz auf der vom Scheibenrand 5 abgewandten Seite verfügt. Bis auf das Übermaß 14 ist das Sichtfeld der Windschutzscheibe 1 deckungsgleich zu dem zwischen beiden Sammelleitern 11, 12 befindlichen Heizfeld.

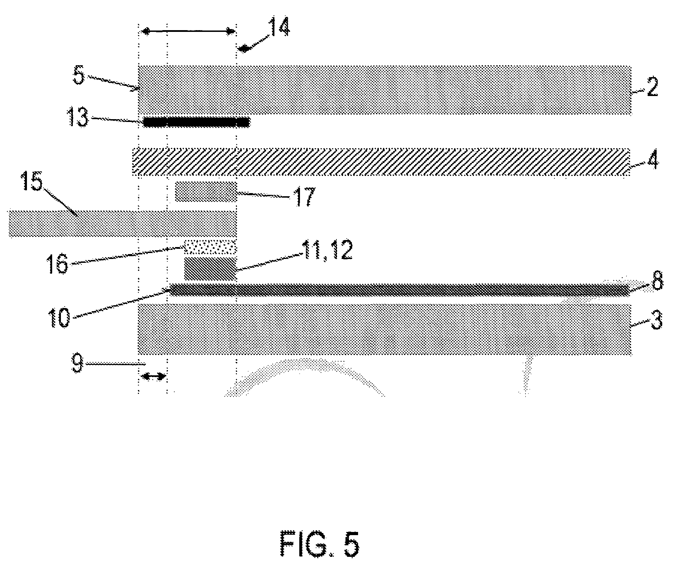

Wie eingangs bereits dargestellt, können die beiden Sammelleiter 11, 12 durch Aufdrucken beispielsweise im Siebdruck einer metallischen Druckpaste (beispielsweise Silberdruckpaste) auf die Heizbeschichtung 8 oder durch Aufbringen eines vorgefertigten Metallstreifens aus beispielsweise Kupfer oder Aluminium hergestellt werden. Die Anschlussleiter 15 können in herkömmlicher Weise, beispielsweise durch Verlöten, mit den Sammelleitern 11, 12 elektrisch verbunden werden. Wie in Fig. 4 dargestellt, können die Anschlussleiter 15 aber auch durch einen elektrisch leitfähigen Klebstoff, welcher hier beispielsweise in Form eines Klebstoffstreifens 16 ausgeführt ist, mit den Sammelleitern 11, 12 verklebt werden. Wie in Fig. 5 dargestellt, kann weiterhin eine luft- und wasserdichte Versiegelung vorgesehen sein, welche hier beispielsweise als Versiegelungsstreifen 17 ausgeführt ist. Hierdurch wird die Heizbeschichtung 8 zusätzlich vor Feuchtigkeit und vorzeitigem Verschleiß geschützt.

Die Sammelleiter 11, 12 haben vorzugsweise einen elektrischen Widerstand pro Längeneinheit, der im Bereich von 0,15 bis 4 Ω/m liegt. Der spezifische Widerstand der beiden Sammelleiter 11, 12 liegt insbesondere für im Druckverfahren hergestellte Sammelleiter 11, 12 vorzugsweise im Bereich von 2 bis 4 µOhm·cm. Die Breite der streifenförmigen Sammelleiter 11, 12 beträgt zumindest in einem oder mehrere Abschnitten weniger als 5 mm, wobei die Breite in diesem Abschnitten so bemessen ist, dass die Sammelleiter 11, 12 jeweils maximal 10 W/m, vorzugsweise maximal 8 W/m, beispielsweise 5 W/m, als Verlustleistung abgeben. Vorzugsweise liegt die Breite der streifenförmigen Sammelleiter 11, 12 zu diesem Zweck zumindest abschnittsweise jeweils im Bereich von 1 bis weniger als 5 mm. Die Dicke der Sammelleiter 11, 12 liegt vorzugsweise im Bereich von 5 bis 25 µm, stärker bevorzugt im Bereich von 10 bis 15 µm. Die Querschnittsfläche der Sammelleiter 11, 12 liegt vorzugsweise im Bereich von 0,01 bis 1 mm², stärker bevorzugt im Bereich von 0,1 bis 0,5 mm².

Für beispielsweise aus Kupfer (Cu) bestehende, vorgefertigte streifenförmige Sammelleiter 11, 12 liegt die Dicke vorzugsweise im Bereich von 30 bis 150 µm, stärker bevorzugt im Bereich von 50 bis 100 µm. Für diese Sammelleiter 11, 12 liegt die Querschnittsfläche vorzugsweise im Bereich von 0,05 bis 0,25 mm². Die Breite der streifenförmigen Sammelleiter 11, 12 beträgt zumindest abschnittsweise weniger als 5 mm.

Vorzugsweise ist der elektrische Widerstand der Heizbeschichtung 8 so gewählt, dass der durch das Heizfeld 23 fließende Strom eine Größe von maximal 5 A hat. Vorzugsweise liegt der elektrische Flächenwiderstand der Heizbeschichtung 8 im Bereich von 5 bis 200 Ω/□, stärker bevorzugt im Bereich von 10 bis 80 Ω/□ und insbesondere im Bereich von 40 bis 80 Ω/□. Denkbar ist jedoch auch, dass der Flächenwiderstand der Heizbeschichtung 8 im Bereich von mehr als 100 bis 200 Ω/□ liegt, um die Verlustleistung der Sammelleiter 11, 12 zu verringern.

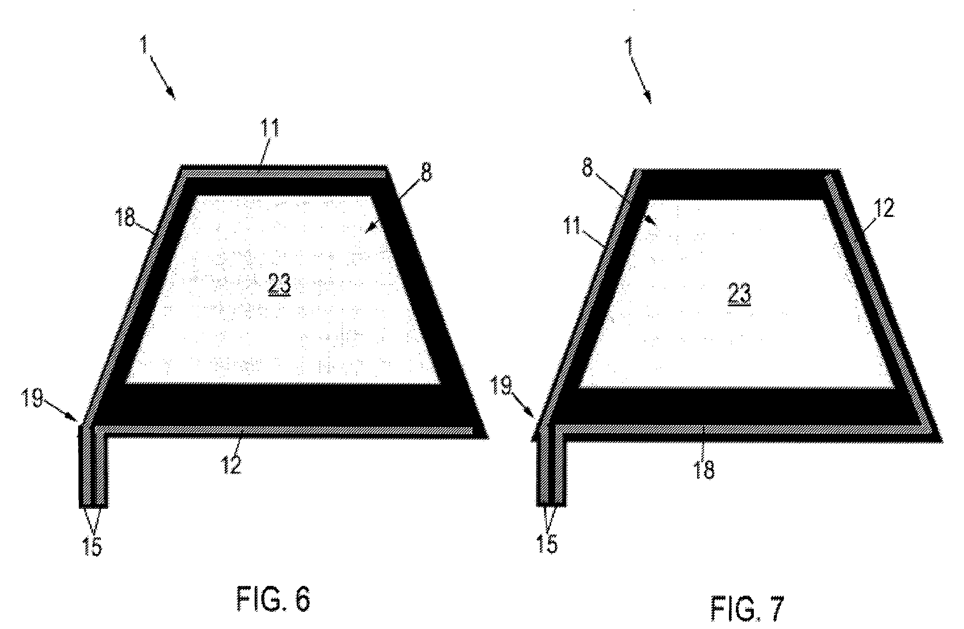

Es wird nun Bezug auf Fig. 6 bis 9 genommen, worin weitere beispielhafte Ausgestaltungen der erfindungsgemäßen Windschutzscheibe 1 gezeigt sind. Um unnötige Wiederholungen zu vermeiden, werden lediglich die Unterschiede zu den bisherigen Ausgestaltungen erläutert und ansonsten auf die dort gemachten Ausführungen Bezug genommen.

In Fig. 6 ist eine Variante gezeigt, welche sich von der in Fig. 1 gezeigten Variante darin unterscheidet, dass der obere erste Sammelleiter 11 mit einem Verbindungsleiter 18 elektrisch verbunden ist, der sich zusammen mit dem unteren zweiten Sammelleiter 12 bis zu einer gemeinsamen Anschlusszone 19 zur Verbindung mit zwei Anschlussleitern 15 erstreckt. Im vorliegenden Beispiel befindet sich die gemeinsame Anschlusszone 19 in der linken unteren Ecke der Windschutzscheibe 1, was eine besonders einfache elektrische Kontaktierung der beiden Sammelleiter 11, 12 ermöglicht. Der Verbindungsleiter 18 ist hier beispielsweise als Metallband ausgeführt.

In Fig. 7 ist eine Variante gezeigt, welche sich von der in Fig. 6 gezeigten Variante dahingehend unterscheidet, dass die beiden Sammelleiter 11, 12 an den beiden seitlichen zweiten Seiten 7 der Windschutzscheibe 1 angeordnet sind. Dabei werden die beiden Sammelleiter 11, 12 vom umlaufenden Maskierungsstreifen 13 vollständig kaschiert. Zudem ist der rechte zweite Sammelleiter 12 mit einem Verbindungsleiter 18 elektrisch verbunden, der sich gemeinsam mit dem linken ersten Sammelleiter 11 bis zu einer gemeinsamen Anschlusszone 19 zur Verbindung mit zwei Anschlussleitern 15 erstreckt. Im vorliegenden Beispiel befindet sich die gemeinsame Anschlusszone 19 in der linken unteren Ecke der Windschutzscheibe 1, was eine besonders einfache elektrische Kontaktierung der beiden Sammelleiter 11, 12 ermöglicht. Der Verbindungsleiter 18 ist hier beispielsweise als Metallband ausgeführt. Insbesondere kann sich der Verbindungsleiter 18 innerhalb des Bereichs der Ruhe- oder Parkstellung von zum Wischen der Windschutzscheibe 1 vorgesehenen Scheibenwischern befinden. Durch diese Maßnahme kann erreicht werden, dass dieser Bereich der Windschutzscheibe 1 durch den Verbindungsleiter 18 beheizt werden kann, um ein Festfrieren der Scheibenwischer zu verhindern. Auf zusätzliche Vorkehrungen zur Heizung dieses Bereichs kann verzichtet werden.

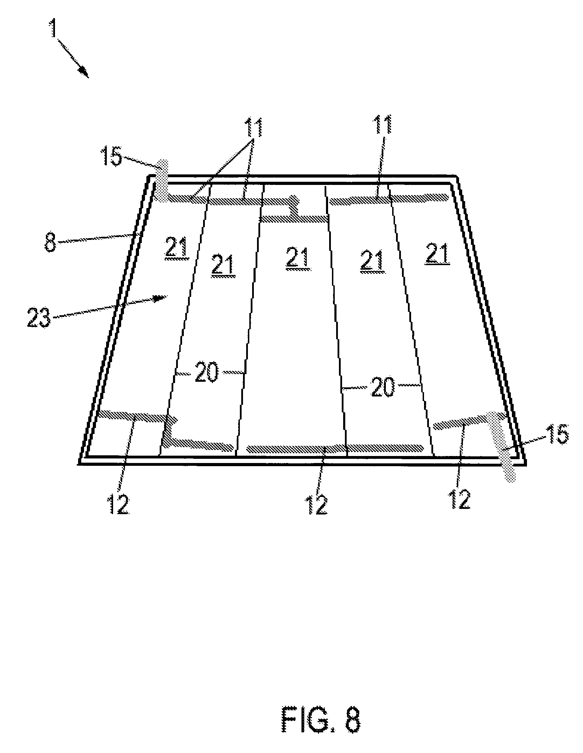

In Fig. 8 ist eine weitere Variante gezeigt, welche sich von der in Fig. 1 gezeigten Variante darin unterscheidet, dass die Heizbeschichtung 8 durch vier entschichtete Zonen 20 in fünf galvanisch vollständig voneinander getrennte Segmente 21 aufgeteilt ist. Es versteht sich, dass eine größere oder kleinere Zahl entschichteter Zonen 20 und dementsprechend eine größere oder kleinere Zahl galvanisch getrennter Segmente 21 vorgesehen sein kann. Die entschichteten Zonen 20 sind hier beispielsweise als parallele Linien ausgeführt und beispielsweise durch Laserabtrag entschichtet, wobei gleichermaßen alternative Verfahren wie chemischer Abtrag beispielsweise mittels Ätzung oder mechanischer Abtrag beispielsweise mittels eines Reibrads vorgesehen sein können. Die entschichteten Zonen 20 unterteilen die Heizbeschichtung jeweils vollständig in zumindest annähernd rechteckförmige Segmente 21.

Wesentlich hierbei ist, dass die bezogen auf die Heizbeschichtung 8 elektrisch isolierten Segmente 21 durch eine Mehrzahl erster und zweiter Sammelleiter 11, 12 seriell miteinander verschaltet sind. Zu diesem Zweck sind erste und zweite Sammelleiter 11, 12 am oberen und unteren Scheibenrand 5 angeordnet, wobei jeweils ein Sammelleiter der einen Polarität, der sich innerhalb eines einzelnen Segments 21 befindet, in Gegenüberstellung zu einem Sammelleiter der anderen Polarität, welcher dieses Segment 21 mit einem benachbarten Segment 21 elektrisch verbindet, angeordnet ist.

In dem Beispiel von Fig. 8 seien die fünf Segmente 21 von links nach rechts mit den Ziffern 1 bis 5 nummeriert. Demnach ist am oberen Scheibenrand 5 der Windschutzscheibe 1 ein erster Sammelleiter 11 nur mit dem ersten Segment 21, ein weiterer erster Sammelleiter 11 mit dem zweiten und dritten Segment 21 und ein noch weiterer erster Sammelleiter 11 mit dem vierten und fünften Segment 21 elektrisch verbunden. Dabei werden die zweiten und dritten Segmente 21, sowie die vierten und fünften Segmente 21 jeweils durch die ersten Sammelleiter 11 kurzgeschlossen. Andererseits ist am unteren Scheibenrand 5 der Windschutzscheibe 1 ein zweiter Sammelleiter 12 mit dem ersten und zweiten Segment 21, ein weiterer zweiter Sammelleiter 12 mit dem dritten und vierten Segment 21, sowie ein noch weiterer zweiter Sammelleiter 12 mit dem fünften Segment 21 elektrisch verbunden. Dabei werden die ersten und zweiten Segmente 21, sowie die dritten und vierten Segmente 21 jeweils durch die zweiten Sammelleiter 12 kurzgeschlossen. In dem Heizfeld von Fig. 8 muss der Heizstrom somit nacheinander durch die seriell miteinander verschalteten Segmente 21 fließen, wodurch der effektive (Flächen-)Widerstand (Gesamtwiderstand) der Heizbeschichtung 8 deutlich vergrößert ist.

Der Flächenwiderstand der Heizbeschichtung 8 liegt vor der Herstellung der entschichteten Zonen 20 vorzugsweise im Bereich von 1 bis 10 Ω/□ und beträgt insbesondere bevorzugt 4 Ω/□. Nach Herstellung der entschichteten Zonen 20 liegt der Gesamtwiderstand der Heizbeschichtung 8 vorzugsweise im Bereich von 10 bis 160 Ω, stärker bevorzugt im Bereich von 40 bis 80 Ω.

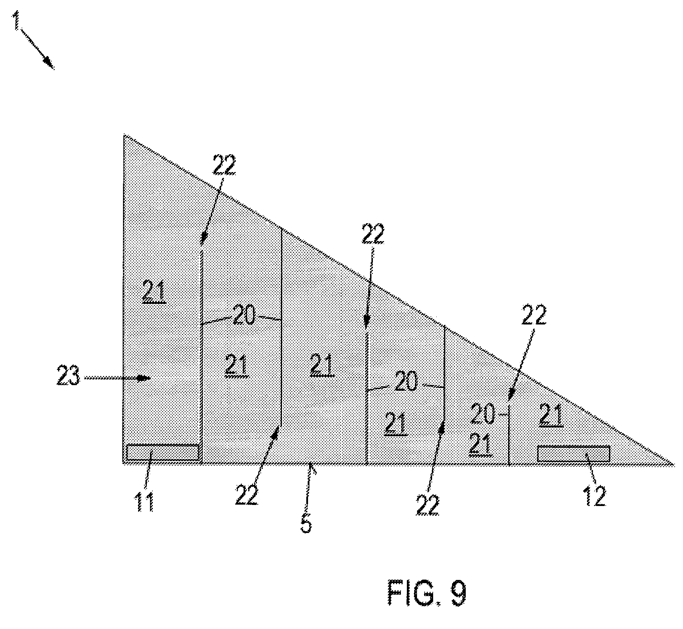

In Fig. 9 ist eine weitere Variante gezeigt, welche sich von der in Fig. 8 gezeigten Variante darin unterscheidet, dass es sich bei der Scheibe 1 um eine Seitenscheibe eines Kraftfahrzeugs handelt. Weiterhin ist die Heizbeschichtung 8 durch fünf entschichtete Zonen 20 teilweise unterbrochen und in sechs galvanisch miteinander verbundene Segmente 21 unterteilt. Die entschichteten Zonen 20 unterteilen die Heizbeschichtung 8 somit jeweils nur teilweise, jedoch nicht vollständig. Es versteht sich, dass eine größere oder kleinere Zahl entschichteter Zonen 20 und dementsprechend eine größere oder kleinere Zahl galvanisch miteinander verbundener Segmente 21 vorgesehen sein kann. Die entschichteten Zonen 20 sind hier beispielsweise als parallele Linien ausgeführt.

Im Unterschied zur Variante von Fig. 8 sind die entschichteten Zonen 20 wechselweise jeweils mit einem Zonenende 22 in Bezug auf den gegenüberliegenden Scheibenrand 5 so weit rückversetzt, dass die Heizbeschichtung 8 nicht vollständig unterteilt wird. Dies hat zur Folge, dass der Heizstrom mäanderartig durch die seriell miteinander verschalteten Segmente 21 fließen muss, wodurch der effektive Widerstand (Gesamtwiderstand) der Heizbeschichtung 8 vergrößert ist.

In der folgenden Tabelle I sind beispielhafte Werte für die jeweiligen Sammelleiter 11, 12 angegeben, wobei diese Werte einer Verlustleistung von 0,05 W/cm entsprechen.

**Tabelle I**

| | | | | | | | |
|---|---|---|---|---|---|---|---|
| A: Speisespannung [V] B: Heizleistung der Heizbeschichtung [W/m²] C: Sammelleiter-Typ D: Dicke des Sammelleiters [µm] E: minimale Querschnittsfläche des Sammelleiters (Anschlussleiter am Ende) [mm²] F: minimale Querschnittsfläche des Sammelleiters (Anschlussleiter in Mitte) [mm²] G: Breite des Sammelleiters (Anschlussleiter am Ende) [mm] H: Breite des Sammelleiters (Anschlussleiter in Mitte) [mm] | | | | | | | |

| A | B | C | D | E | F | G | H |
|---|---|---|---|---|---|---|---|
| 100 | 350 | Ag (Siebdruck) | 15 | 0,1305 | 0,0326 | 8,7000 | 2,1750 |
| 400 | 1000 | Ag (Siebdruck) | 15 | 0,0690 | 0,0173 | 4,6000 | 1,1500 |
| 400 | 350 | Ag (Siebdruck) | 15 | 0,0075 | 0,0019 | 0,5000 | 0,1250 |
| 100 | 350 | Cu-Litze | 50 | 0,0735 | 0,0184 | 1,4703 | 0,3676 |
| 400 | 1000 | Cu-Litze | 50 | 0,0389 | 0,0097 | 0,7774 | 0,1944 |
| 400 | 350 | Cu-Litze | 50 | 0,0042 | 0,0011 | 0,0845 | 0,0211 |

In der folgenden Tabelle II sind beispielhafte Werte für in Form von Cu-Litzen ausgeführte Sammelleiter 11, 12 angegeben.

**Tabelle II**

| | | | | | | |
|---|---|---|---|---|---|---|
| A: spezifischer Widerstand [µΩcm] B: Dicke [µm] C : Breite [mm] D: Heizstrom [A] E: Widerstand pro Längeneinheit [Ω/m] F: Heizleistung (Verlustleistung) [W/m] G: Heizleistung (Verlustleistung) [W/m] | | | | | | |

| A | B | C | D | E | F | G |
|---|---|---|---|---|---|---|
| 1,7 | 50 | 10 | 15 | 0,034 | 7,65 | 765 |
| 1,7 | 100 | 6 | 15 | 0,0283 | 6,375 | 1062,5 |

In der folgenden Tabelle III sind beispielhafte Werte für im Siebdruck aus einer Silberdruckpaste hergestellte Sammelleiter 11, 12 angegeben. Die Leitfähigkeit der Sammelleiter 11, 12 beträgt 2,9·10⁻⁸ Ohm·m, deren Dicke beträgt 15 µm.

**Tabelle III**

| | | | | | | | |
|---|---|---|---|---|---|---|---|
| A: Heizleistung Heizbeschichtung pro Flächeneinheit [W/m²] B: Heizleistung [W] C: Spannung [V] D: Strom [A] E: Heizleistung pro Längeneinheit Sammelleiter [W/m] F: Widerstand pro Längeneinheit Sammelleiter [Ohm/m] G: Querschnitt [mm²] H: Breite [mm] | | | | | | | |

| A | B | C | D | E | F | G | H |
|---|---|---|---|---|---|---|---|
| 350 | 473 | 400 | 1,18 | 5 | 3,58 | 0,01 | 0,54 |
| 350 | 473 | 100 | 4,73 | 5 | 0,22 | 0,13 | 8,63 |
| 377 | 509 | 100 | 5 | 5 | 0,19 | 0,15 | 10 |
| 1000 | 1350 | 265 | 5 | 5 | 0,19 | 0,15 | 10 |
| 444 | 600 | 200 | 3 | 5 | 0,56 | 0,05 | 3,48 |

Für eine transparente Scheibe 1 werden im Folgenden weitere beispielhafte Werte angegeben:
Speisespannung 400 V

### Scheibengeometrie:

Scheibenhöhe 0,9 m
Scheibenbreite 1,5 m
Länge Anschlussleitung 1,5 m

### Sammelleiter (hergestellt im Siebdruckverfahren aus Silberdruckpaste):

spez. Widerstand 3 µΩcm
Breite 0,5 mm
Dicke 15 µm
Breite Verlängerung 0,5 mm
Widerstand pro Längeneinheit 0,0369 Ω/cm
Widerstand Sammelleiter + Lötzinn 0,01 Ω

### Heizbeschichtung

Flächenwiderstand 202,09 Ω/□

### Gesamtwiderstand (Summe aus beiden Sammelleitern)

Heizbeschichtung 336,82 Ω
Sammelleiter 1,66 Ω
Verlängerung der Sammelleiter 5,54 Ω
Kontakt Sammelleiter-Heizbeschichtung 0,04101 Ω Anschlussleiter 0,02 Ω
Gesamtwiderstand 344,08 Ω

### Heizleistung

Gesamtheizleistung 465,0 W

| | Spannung [V] | Leistung [W] | Spez. Leistung [W/m²] |
|---|---|---|---|
| Heizbeschichtung | 391,6 | 455,2 | 337,2 |
| Sammelleiter | 1,9 | 2,2 | 2302,2 |
| Verlängerung | 6,4 | 7,5 | 9208,7 |
| Kontakt Sammelleiter-Heizbeschichtung | 0,0 | 0,1 | 56,8 |
| Summe Sammelleiter | | 2,3 | 2359,0 |
| Anschlussleiter | 0,0 | 0,0 | |

### Heißeste Teile des Sammelleiters

Gesamtstrom 1,2 A
Max. Heizleistung 0,050 W/cm (9208,7 W/m²)

### Inhomogenität wegen Sammelleiterwiderstand

Heizleistung in Heizbeschichtung ohne Sammelleiter 474,98 W Heizleistung in Heizbeschichtung mit Sammelleiter 465,74 W Inhomogenität 1,94 %

### Geometrische Inhomogenität

Breitenvariation -10 cm
Widerstand Heizbeschichtung mit neuer Breite 314,4 Ω Gesamtwiderstand mit neuer Breite 321,6 Ω
Heizleistung der Heizbeschichtung mit neuer Breite 486,2 W Inhomogenität 6%

Die Erfindung stellt eine transparente Scheibe mit elektrisch heizbarer Beschichtung zur Verfügung, an die eine hohe Speisespannung im Bereich von mehr als 100 bis 400 V zum Erzielen einer für praktische Anwendungen geeigneten Heizleistung angelegt werden kann. Die Breite der Sammelleiter beträgt zumindest in einem oder mehreren Abschnitten weniger als 5 mm und ist in diesen Abschnitten zudem so bemessen, dass die Heizleistung maximal 10 W/m beträgt. Hierdurch können die Sammelleiter 11, 12 insbesondere an den seitlichen Scheibenrändern angeordnet und durch eine opaken Maskierungsstreifen kaschiert werden.

### Bezugszeichenliste

- 1: Scheibe
- 2: Außenscheibe
- 3: Innenscheibe
- 4: Klebeschicht
- 5: Scheibenrand
- 6: erste Seite
- 7: zweite Seite
- 8: Heizbeschichtung
- 9: Randstreifen
- 10: Beschichtungsrand
- 11: erster Sammelleiter
- 12: zweiter Sammelleiter
- 13: Maskierungsstreifen
- 14: Übermaß
- 15: Anschlussleiter
- 16: Klebstoffstreifen
- 17: Versiegelungsstreifen
- 18: Verbindungsleiter
- 19: Anschlusszone
- 20: entschichtete Zone
- 21: Segment
- 22: Zonenende
- 23: Heizfeld

## Patentansprüche

1. Transparente Scheibe (1) mit einer leitfähigen Beschichtung (8), die sich zumindest über einen Teil der Scheibenfläche, insbesondere über deren Sichtfeld erstreckt, wobei die leitfähige Beschichtung (8) mit mindestens zwei streifenförmigen Sammelleitern (11, 12) elektrisch so verbunden ist, dass nach Anlegen einer Speisespannung ein Strom über ein zwischen den Sammelleitern (11, 12) gebildetes Heizfeld (23) fließt, **dadurch gekennzeichnet, dass** die leitfähige Beschichtung (8) einen solchen elektrischen Widerstand hat, dass bei Anlegen einer Speisespannung im Bereich von mehr als 100 bis 400 Volt eine Heizleistung im Bereich von 300 bis 1000 Watt/m² vom Heizfeld (23) abgegeben wird, wobei die Sammelleiter (11, 12) :
- jeweils zumindest abschnittsweise eine maximale Breite von weniger als 5 mm haben und die Breite dabei so bemessen ist, dass ein maximaler Leistungsverlust 10 Watt/m beträgt, und
- jeweils einen spezifischen Widerstand im Bereich von 2 bis 4 µOhm·cm aufweisen, wobei
die leitfähige Beschichtung (8) einen elektrischen Widerstand pro Flächeneinheit im Bereich von mehr als 100 bis 200 Ohm/Quadrat hat.

2. Transparente Scheibe (1) nach Anspruch 1, bei welcher die Sammelleiter (11, 12) jeweils zumindest abschnittsweise eine Breite im Bereich von 1 bis weniger als 5 mm haben.

3. Transparente Scheibe (1) nach einem der Ansprüche 1 oder 2, bei welcher die Sammelleiter (11, 12) jeweils einen elektrischen Widerstand pro Längeneinheit im Bereich von 0,15 bis 4 Ohm/m haben.

4. Transparente Scheibe (1) nach einem der Ansprüche 1 bis 3, bei welcher die leitfähige Beschichtung (8) einen solchen elektrischen Widerstand aufweist, dass der durch das Heizfeld (23) fließende Strom eine Größe von maximal 5 A hat.

5. Transparente Scheibe (1) nach einem der Ansprüche 1 bis 4, bei welcher die Sammelleiter (11, 12) in einer gemeinsamen Anschlusszone (19) von Anschlussleitern (15) elektrisch kontaktierbar sind.

6. Transparente Scheibe (1) nach einem der Ansprüche 1 bis 5, bei welcher das Heizfeld (23) durch eine oder mehrere entschichtete Zonen (20) in eine Mehrzahl galvanisch voneinander getrennte Segmente (21) unterteilt wird, wobei die Segmente (21) durch die Sammelleiter (11, 12) seriell miteinander verbunden sind.

7. Transparente Scheibe (1) nach einem der Ansprüche 1 bis 5, bei welcher das Heizfeld (23) durch eine oder mehrere entschichtete Zonen (20) in eine Mehrzahl galvanisch seriell miteinander verbundener Segmente (21) unterteilt wird, wobei ein Strompfad zwischen den Sammelleiter (11, 12) gegenüber einem Strompfad ohne entschichtete Zonen (20) verlängert ist.

8. Transparente Scheibe (1) nach einem der Ansprüche 1 bis 7, bei welcher die Sammelleiter (11, 12) durch Aufdrucken einer metallischen Druckpaste auf die leitfähige Beschichtung (8), beispielsweise im Siebdruckverfahren, hergestellt sind.

9. Transparente Scheibe (1) nach einem der Ansprüche 1 bis 7, bei welcher die Sammelleiter (11, 12) in Form von mit der leitfähigen Beschichtung (8) verbundenen, vorgefertigten Metallstreifen hergestellt sind, welche durch einen leitfähigen Klebstoff an der leitfähigen Beschichtung (8) befestigt sind.

10. Transparente Scheibe (1) nach einem der Ansprüche 1 bis 9, welche als Verbundscheibe mit zwei durch eine thermoplastische Klebeschicht (4) miteinander verbundenen Einzelscheiben (2, 3) ausgeführt ist, wobei sich die heizbare Beschichtung (8) auf zumindest einer Oberfläche der Einzelscheiben (2, 3) und/oder auf einer Oberfläche eines zwischen den Einzelscheiben (2, 3) angeordneten Trägers befindet.

11. Transparente Scheibe (1) nach einem der Ansprüche 1 bis 10, welche als Fahrzeug-Windschutzscheibe ausgeführt ist, bei welcher sich ein an einem unteren Scheibenrand (5) angeordneter Sammelleiter (12) unterhalb einer Ruhe- oder Parkstellung von zum Wischen der Scheibe vorgesehenen Scheibenwischern befindet.

12. Transparente Scheibe (1) nach einem der Ansprüche 1 bis 10, welche als Fahrzeug-Windschutzscheibe ausgeführt ist, bei welcher die Sammelleiter (11, 12) am seitlichen Scheibenrand (5) angeordnet sind.

13. Transparente Scheibe (1) nach Anspruch 12, bei welcher die Sammelleiter (11, 12) von zumindest einem opaken Abdeckelement (13) überdeckt sind.

14. Verwendung einer transparenten Scheibe (1) nach einem der Ansprüche 1 bis 13 als funktionales Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

## Claims

1. Transparent pane (1) with a conductive coating (8), which extends at least over a part of the pane surface, in particular over its visual field, wherein the conductive coating (8) is electrically connected to at least two strip-shaped bus bars (11, 12) such that after application of a supply voltage, a current flows over a heating field (23) formed between the bus bars (11, 12), **characterized in that** the conductive coating (8) has an electrical resistance such that upon application of a supply voltage in the range of more than 100 to 400 volts, heating output in the range from 300 to 1000 watt/m² is given off by the heating field (23), wherein the bus bars (11, 12):
- have, in each case, at least in sections, a maximum width of less than 5 mm and the width is dimensioned such that a maximum power loss is 10 watt/m, and
- have, in each case, a specific resistivity in the range from 2 to 4 µohm·cm, wherein the conductive coating (8) has an electrical resistance per surface unit in the range of more than 100 to 200 ohm/square.

2. Transparent pane (1) according to claim 1, wherein the bus bars (11, 12) have, in each case, at least in sections, a width in the range from 1 to less than 5 mm.

3. Transparent pane (1) according to one of claims 1 or 2, wherein the bus bars (11, 12) have, in each case, an electrical resistance per unit of length in the range from 0.15 to 4 ohm/m.

4. Transparent pane (1) according to one of claims 1 through 3, wherein the conductive coating (8) has an electrical resistance such that the current flowing through the heating field (23) has a maximum magnitude of 5 A.

5. Transparent pane (1) according to one of claims 1 through 4, wherein the bus bars (11, 12) can be electrically contacted in a common connector zone (19) by connector conductors (15).

6. Transparent pane (1) according to one of claims 1 through 5, wherein the heating field (23) is subdivided by one or a plurality of decoated zones (20) into a plurality of segments (21) galvanically separated from each other, wherein the segments (21) are serially connected to each other by the bus bars (11, 12).

7. Transparent pane (1) according to one of claims 1 through 5, wherein the heating field (23) is subdivided by one or a plurality of decoated zones (20) into a plurality of segments (21) galvanically connected to each other serially, wherein a current path between the bus bars (11, 12) is lengthened relative to a current path without decoated zones (20).

8. Transparent pane (1) according to one of claims 1 through 7, wherein the bus bars (11, 12) are produced by printing a metallic printing paste onto the conductive coating (8), for example, using the screenprinting method.

9. Transparent pane (1) according to one of claims 1 through 7, wherein the bus bars (11, 12) are produced in the form of prefabricated metal strips connected to the conductive coating (8), which strips are affixed on the conductive coating (8) by means of a conductive adhesive.

10. Transparent pane (1) according to one of claims 1 through 9, which is implemented as a composite pane with two individual panes (2, 3) bonded to each other by a thermoplastic adhesive layer (4), wherein the heatable coating (8) is situated on at least one surface of the individual panes (2, 3) and/or on one surface of a carrier disposed between the individual panes (2, 3).

11. Transparent pane (1) according to one of claims 1 through 10, which is implemented as a motor vehicle windshield, wherein a bus bar (12) disposed on the lower edge of the pane (5) is situated under a resting or parked position of windshield wipers provided to wipe the pane.

12. Transparent pane (1) according to one of claims 1 through 10, which is implemented as a motor vehicle windshield, wherein the bus bars (11, 12) are disposed on the lateral edge of the pane (5).

13. Transparent pane (1) according to claim 12, wherein the bus bars (11, 12) are covered by at least one opaque covering element (13).

14. Use of a transparent pane (1) according to one of claims 1 through 13 as a functional individual piece and as a built-in part in furniture, devices, and buildings, as well as in means of transportation on land, in the air, or on water, in particular in motor vehicles, for example, as a windshield, rear window, side window, and/or glass roof.

## Revendications

1. Vitre transparente (1) avec un revêtement conducteur (8), qui s'étend sur au moins une partie de la surface du vitre, en particulier sur le champ de vision, où le revêtement conducteur (8) est relié électriquement à au moins deux conducteurs collectifs (11, 12) en forme de bandes, de telle manière qu'à la mise sous tension un courant passe par une zone de chauffage (23) créé entre les conducteurs collectifs (11, 12) **caractérisé en ce que** le revêtement conducteur (8) possède une telle résistance qu'à une mise sous tension de >100≤400 volts une capacité de chauffage allant de 300 à 1000 watts/m² de la zone de chauffage (23) est émise, où les conducteurs collectifs (11, 12):
- ont chacun une largeur maximale de moins de 5 mm au moins sur certaines sections et la largeur est dimensionnée de telle manière que la perte maximale de puissance est de 10 Watts/m, et
- présentent chacun une résistance spécifique de l'ordre de 2 à 4 µOhm/cm, où le revêtement conducteur (8) a une résistance électrique par unité de surface de l'ordre >100 200 ohms/carré.

2. Vitre transparente (1) selon la revendication 1, où les conducteurs collectifs (11, 12) au moins par sections ont chacun une largeur comprise entre 1 et moins de 5 mm.

3. Vitre transparente (1) selon l'une des revendications 1 ou 2, où les conducteurs collectifs (11, 12) ont chacun une résistance électrique par unité de longueur comprise entre 0,15 et 4 Ohm/m.

4. Vitre transparente (1) selon l'une des revendications 1 à 3, où le revêtement conducteur (8) présente une telle résistance électrique, que le courant qui passe à travers la zone de chauffage (23) ne dépasse pas 5A.

5. Vitre transparente (1) selon l'une des revendications 1 à 4, où les conducteurs collectifs (11, 12) peuvent être mis en contact électrique par des fils de raccordement dans une zone (19) de raccordement commun (15).

6. Vitre transparente (1) selon l'une des revendications 1 à 5, où la zone de chauffage (23) est subdivisée par un ou plusieurs zones (20) décapées dans une pluralité de segments (21) séparés les un des autres galvaniquement, où les segments (21) sont connectés en série par l'intermédiaire des conducteurs collectifs (11, 12).

7. Vitre transparente (1) selon l'une des revendications 1 à 5, où la zone de chauffage (23) est subdivisée par un ou plusieurs zones (20) décapées dans une pluralité de segments (21) connectés électriquement en série entre eux, et un trajet de courant entre les conducteurs collectifs (11, 12) est prolongé par rapport à un trajet de courant sans zones décapées (20).

8. Vitre transparente (1), selon l'une des revendications 1 à 7, où les conducteurs collectifs (11, 12) sont produits par l'application d'une pâte métallique d'impression sur le revêtement conducteur (8), par exemple, par un procédé de sérigraphie.

9. Vitre transparente (1) selon l'une des revendications 1 à 7, où les conducteurs collectifs (11, 12) sont réalisés à partir de bandes métalliques préfabriquées reliées au revêtement conducteur (8), qui sont fixés sur le revêtement conducteur (8) par un adhésif conducteur.

10. Vitre transparente (1) selon l'une des revendications 1 à 9, qui est réalisée comme vitre feuilletée avec deux vitres individuelles (2, 3) reliées par une couche adhésive thermoplastique, où le revêtement chauffant (8) se trouve sur au moins une surface des vitres individuelles (2, 3) ou sur une surface d'un support disposé entre les vitres individuelles (2, 3).

11. Vitre transparente (1) selon l'une des revendications 1 à 10, qui est réalisée comme pare-brise de véhicule où un conducteur collectif (12) est disposé sur un bord (5) de la vitre sous une position de repos ou de rangement des essuie-glaces destiné à essuyer la vitre.

12. Vitre transparente (1) selon l'une des revendications 1 à 10, réalisée comme pare-brise de véhicule, où les conducteurs collectifs (11, 12) sont disposés sur le bord latéral (5) de la vitre.

13. Vitre transparente (1) selon la revendication 12 où les conducteurs collectifs (11, 12) sont recouverts par au moins un élément de couverture opaque (13).

14. Utilisation d'une vitre transparente (1) selon l'une des revendications 1 à 13, comme élément fonctionnel et accessoire dans le mobilier, des appareils et des bâtiments, ainsi que dans des moyens de locomotion sur la terre, dans l'air ou sur l'eau, en particulier dans les véhicules automobiles, par exemple, comme pare-brise, lunette arrière, vitre latérale et/ou toit en verre.
